# EUROPÄISCHE PATENTSCHRIFT

(11) **EP 2 256 000 B1**
(45) Veröffentlichungstag und Bekanntmachung des Hinweises auf die Patenterteilung: **14.03.2012**
(21) Anmeldenummer: 10005294.3
(22) Anmeldetag: 20.05.2010
(51) Int. Cl.: B60R 9/10, F16B 7/14

(54) **Verschieblicher Lastenträger mit einer Spanneinrichtung**
Slidable load carrier with a clamping device
Support de charge déployable par translation avec dispositif de verrouillage

(30) Priorität: 27.05.2009 DE 102009022622; 24.12.2009 DE 102009060385
(43) Veröffentlichungstag der Anmeldung: 01.12.2010
(73) Patentinhaber: WESTFALIA - Automotive GmbH, 33378 Rheda-Wiedenbrück (DE)
(72) Erfinder: Hachmann, Thomas, 59269 Beckum (DE)
(74) Vertreter: Bregenzer, Michael

(56) Entgegenhaltungen:
- EP-A1- 1 876 061
- DE-A1-102005 036 025

## Beschreibung

Die Erfindung betrifft eine Kraftfahrzeuganbaukomponente, insbesondere einen Lastenträger oder eine Anhängekupplung, mit einer Drehlagereinrichtung, bei der ein Schwenkkörper an einem Drehlagerabschnitt eines Drehlagerbolzens drehbar gelagert ist, wobei der Drehlagerabschnitt zwischen einem Schraubenkopf des Drehlagerbolzens und einer Widerlagereinrichtung angeordnet ist, in die der Drehlagerbolzen eingeschraubt ist, wobei eine Länge des Drehlagerabschnitts durch Einschrauben und Ausschrauben des Drehlagerbolzens um seine Drehlagerbolzen-Drehachse in die Widerlagereinrichtung einstellbar ist (siehe EP 1876061 A)*.*

Bei Kraftfahrzeuganbaukomponenten, beispielsweise Lastenträgern, Anhängekupplungen und dergleichen, kann ein einfaches Drehlager dadurch hergestellt werden, dass ein Drehlagerbolzen mit einer Widerlagereinrichtung verbunden ist, wobei zwischen der Widerlagereinrichtung und einem Schraubenkopf des Drehlagerbolzens dann ein Drehlagerabschnitt für einen Schwenkkörper gebildet ist. Dieser kann beispielsweise eine Trägerrinne für ein auf dem Lastenträger abzustellendes Fahrrad oder dergleichen sein. Auch zur Herstellung einer Spannvorrichtung ist ein solches Drehlager vorteilhaft, wobei der Schwenkkörper dann z.B. zum Verstellen der Spannvorrichtung zwischen einer Lösestellung und einer Spannstellung vorgesehen ist.

Eine Länge des Drehlagerabschnittes lässt sich dadurch verändern, dass man den Drehlagerbolzen weiter oder weniger weit in ein Schraubgewinde der Widerlagereinrichtung einschraubt. Die Widerlagereinrichtung kann dabei mehrteilig sein und beispielsweise eine Mutter enthalten. Sodann ist der Drehlagerbolzen jedoch so zu fixieren, dass sich die Länge des Drehlagerabschnittes nicht mehr verstellt. Man kann dies beispielsweise dadurch erzielen, dass man den Drehlagerbolzen durch Verschweißen oder Verkleben drehfest festlegt, was jedoch eine spätere Verstellung des Drehbolzens bzw. ein Ein- und Ausschrauben unmöglich macht. Wenn sich eine Spannvorrichtung dann verstellt hat, beispielsweise durch Verschleiß, ist es nicht mehr möglich, einen Längenausgleich des Drehlagerabschnittes vorzunehmen.

Es ist daher die Aufgabe der vorliegenden Erfindung, eine Verdrehsicherung für den Drehlagerbolzen einer Drehlagereinrichtung einer Kraftfahrzeuganbaukomponente der eingangs genannten Art bereitzustellen.

Zur Lösung der Aufgabe ist bei einer Kraftfahrzeuganbaukomponente, insbesondere einem Lastenträger oder einer Anhängekupplung, der eingangs genannten Art vorgesehen, dass sie eine Sicherungseinrichtung mit einer an einem Schraubenkopfabschnitt angeordneten Formschluss-Halteaufnahme zum Aufnehmen und formschlüssigen Halten des Schraubenkopfs in seiner jeweiligen Drehlage aufweist, dass die Sicherungseinrichtung einen vor den Schraubenkopf vorstehenden, neben dem Schraubenkopfabschnitt angeordneten Befestigungsabschnitt zur Befestigung an einer Gegenhalterung aufweist, und dass der Befestigungsabschnitt in mindestens zwei Schwenklagen, deren Schwenkachse durch die Drehlagerbolzen-Drehachse definiert ist, an der Gegenhalterung festlegbar ist.

Ein erfindungsgemäßer Gedanke ist es, dass die Sicherungseinrichtung in verschiedenen Schwenklagen bezüglich der Drehlagerbolzen-Drehachse verschwenkbar ist und so jeweils den Schraubenkopf in unterschiedlichen Drehstellungen drehfest festlegen kann. Die Gegenhaltereinrichtung bildet zweckmäßigerweise einen Bestandteil der Drehlagereinrichtung.

Es versteht sich, dass zwar prinzipiell einige Schwenklagen, mindestens jedoch zwei, ausreichen können, um genügend Drehverstellmöglichkeiten des Drehlagerbolzens zu ermöglichen. Zweckmäßigerweise ist jedoch ein kontinuierlicher Schwenkbereich des Befestigungsabschnittes möglich, so dass sozusagen eine stufenlose Festlegung des Schraubenkopfes in seinem jeweiligen Drehpositionen möglich ist.

Zweckmäßigerweise umfasst die Sicherungseinrichtung einen Sicherungsbolzen, mit dem sie an der Gegenhalterung befestigbar ist. Der Bolzen durchdringt abhängig von der jeweiligen Schwenklage der Sicherungseinrichtung zueinander beabstandete Durchtrittsöffnungsbereiche einer Durchtrittsöffnungsanordnung. Diese kann am Befestigungsabschnitt der Sicherungseinrichtung oder alternativ auch an der Gegenhalterung vorgesehen sein. Die Durchtrittsöffnungsbereiche haben jedoch in beiden Fällen im Wesentlichen denselben Radialabstand zu der Drehlagerbolzen-Drehachse.

Eine alternative Befestigung der Sicherungseinrichtung, bei der kein Bolzen erforderlich ist, könnte auch ein Verklemmen oder Verspannen.

Die Drehlagerbolzen-Drehachse und der Sicherungsbolzen sind also in einem Abstand zueinander angeordnet.

Zwar wäre es prinzipiell möglich, mehrere, diskrete Durchtrittsöffnungsbereiche vorzusehen, beispielsweise mehrere einen Drehwinkel zueinander aufweisende, denselben Radialabstand zur Drehlagerbolzen-Drehachse aufweisende Durchtrittsöffnungen. Bevorzugt ist es jedoch, wenn die Durchtrittsöffnungsbereiche Bestandteile eines bogenförmigen Langloches sind, so dass eine kontinuierliche Verstellung möglich ist. Ferner ist es auch möglich, zusätzlich zu diesem Langloch, das heißt abseits von dem Langloch, eine oder mehrere Durchtrittsöffnungen vorzusehen, die ganz konkret einem einzigen Drehwinkel des Drehlagerbolzens zugeordnet sind.

Die Durchtrittsöffnungsbereiche bzw. deren Mittelachse oder die Mittelachse des Langloches haben zweckmäßigerweise denselben Radialabstand zu der Drehlagerbolzen-Drehachse, zumindest im Wesentlichen. Mit der Formulierung "im Wesentlichen" ist in diesem Zusammenhang gemeint, dass Montagetoleranzen bezüglich des Radialabstandes ausgleichbar sind.

Der Schraubenkopf hat zweckmäßigerweise eine polygonale, beispielsweise hexagonale Außenumfangskontur. Die Formschluss-Halteaufnahme der Sicherungseinrichtung hat eine dazu korrespondierende polygonale Innenumfangskontur. Diese Innenumfangskontur kann in einer im Ausführungsbeispiel nicht realisierten Ausführungsform beispielsweise exakt die gleiche Anzahl von Ecken haben wie der Schraubenkopf, beispielsweise hexagonal sein. In diesem Fall eine eine Anzahl der Innenecken der Innenumfangskontur gleich einer Anzahl der Außenecken der Außenumfangskontur.

Die Innenumfangskontur der Formschluss-Halteaufnahme der Sicherungseinrichtung kann eine Umfangskontur sein, so dass die Außenumfangskontur des Schraubenkopfs vollkommen umschlossen ist. Es ist auch möglich, dass die Innenumfangskontur der Formschluss-Halteaufnahme offen ist, so dass sie nur mit einem Teilumfang der Außenumfangskontur des Schraubenkopfs formschlüssig in Eingriff bringbar ist.

Bevorzugt ist jedoch eine Variante der Erfindung, bei der eine Anzahl der Innenecken der Außenumfangskontur größer als eine Anzahl der Außenecken der Außenumfangskontur ist. Somit sind bei gleicher Schwenklage der Sicherungseinrichtung bezüglich des Schraubenkopfes mehrere Drehlagen des Schraubenkopfes möglich.

Die Anzahl der Innenecken ist zweckmäßigerweise eine ganzzahlige Vielfache der Anzahl der Außenecken, beispielsweise eine doppelt so große Anzahl. Beim vorgenannten hexagonalen Schraubenkopf sind in diesem Fall 12 Innenecken vorgesehen. Es versteht sich, dass die Anzahl die Innenecken auch kleiner oder größer sein kann.

Der Schraubenkopfabschnitt und der Befestigungsabschnitt der Sicherungseinrichtung haben zweckmäßigerweise einen Parallelabstand zur Drehlagerbolzen-Drehachse. Der Befestigungsabschnitt ist somit zweckmäßigerweise zwischen den Längsenden des Drehlagerbolzens angeordnet bzw. verläuft dort. Die Sicherungseinrichtung hat vorteilhaft einen stufigen Querschnitt. Der Schraubenkopfabschnitt und der Befestigungsabschnitt sind zweckmäßigerweise zumindest im Wesentlichen parallel zueinander. Ein den Schraubenkopfabschnitt und den Befestigungsabschnitt miteinander verbindender Verbindungsschenkel verläuft zweckmäßigerweise zumindest im Wesentlichen parallel zur Drehlagerbolzen-Drehachse.

Die Sicherungseinrichtung ist vorteilhaft plattenartig. Eine bevorzugte Variante sieht vor, dass der Befestigungsabschnitt und der Schraubenkopfabschnitt sowie der zweckmäßigerweise dazwischen liegende Stufenschenkel jeweils plattenartig sind. Im Querschnitt ergibt sich vorteilhaft eine Stufe.

Die Drehlagereinrichtung weist vorteilhaft ein den Schwenkkörper umfassendes Spanngetriebe auf, wobei der Schwenkkörper mindestens eine Spannkontur aufweist und an den Drehlagerbolzen zwischen einer ein erstes und ein zweites Bauteil der Kraftfahrzeuganbaukomponente miteinander verspannenden Spannstellung und einer Lösestellung schwenkbar ist, bei der die ersten und zweiten Bauteile der Kraftfahrzeuganbaukomponente zueinander beweglich sind, beispielsweise zueinander verschieblich und/oder zueinander schwenkbar und/oder voneinander lösbar. Die Drehlagereinrichtung bildet zweckmäßigerweise bei dieser Ausgestaltung einen Bestandteil einer Spanneinrichtung oder eine Spanneinrichtung als solche.

Der Drehlagerbolzen bildet zweckmäßigerweise einen Zuganker.

Das erste und das zweite Bauteil sind zweckmäßigerweise Profile, die aneinander verschieblich geführt sind. Das erste Bauteil ist beispielsweise ein Tragprofil, das zweite Bauteil ein Auszugsprofil, das am Tragprofil verschieblich geführt ist.

Der Schwenkkörper hat vorteilhaft eine scheibenförmige Gestalt. Die Spannkontur kann bei dieser Ausgestaltung vorteilhaft an einer vom Trägerbolzen durchdrungenen Flachseite des Schwenkkörpers angeordnet sein. Eine andere Variante, die beim Ausführungsbeispiel nicht dargestellt ist, sieht vor, dass die Spannkontur an einem Außenumfang des Schwenkkörpers angeordnet ist, vorzugsweise an einem Außenumfang eines scheibenförmigen Schwenkkörpers.

Eine der Spannkontur des Schwenkkörpers zugeordnete Gegenkontur ist vorteilhaft an einer von dem Drehlagerbolzen durchdrungenen Spannscheibe oder der Gegenhalterung oder dem Schraubenkopf angeordnet. Vorteilhaft ist an der Gegenhalterung eine Drehsicherung zum drehstabilen Halten der die Gegenkontur aufweisenden Spannscheibe vorhanden. Die Drehsicherung ist beispielsweise dadurch realisiert, dass an der Spannscheibe und der Gegenhalterung angeordnete Vorsprünge und Aufnahmen ineinander greifen.

Die Spannkontur und/oder die Gegenkontur sind zweckmäßigerweise durch eine Federanordnung in die Spannstellung belastet. Die Federanordnung wirkt zweckmäßigerweise parallel oder zumindest im Wesentlichen parallel zur Drehlagerbolzen-Drehachse. Es versteht sich, dass auch eine Feder vorgesehen sein kann, die in eine Spann-Drehrichtung des Schwenkkörpers wirkt und diesen sozusagen in die Spannstellung dreht.

Vorteilhaft umfasst die Federanordnung eine von dem Drehlagerbolzen durchdrungene Feder, beispielsweise eine Tellerfeder. Es versteht sich, dass auch eine Schraubenfeder möglich wäre. Die Feder ist zweckmäßigerweise zwischen dem Schwenkkörper und dem Schraubenkopf angeordnet. Es versteht sich, dass auch eine Feder zwischen der Gegenkontur und einem die Gegenkontur aufweisenden Gegenkonturkörper, beispielsweise der vorgenannten Spannscheibe einerseits und andererseits einem Widerlager für den Gegenkonturkörper angeordnet sein könnte.

Die Spannkontur und/oder die ihr zugeordnete Gegenkontur sind zweckmäßigerweise an kreissektorartigen Sektorvorsprüngen angeordnet, die vor die Flachseite des Schwenkkörpers oder des die Gegenkontur aufweisenden Gegenkonturkörpers, beispielsweise die Spannscheibe, vorstehen. Die Spannkontur und/oder die Gegenkontur sind beispielsweise Auflaufschrägen an den jeweiligen Sektorvorsprüngen.

Der Schwenkkörper stützt sich vorzugsweise an dem Schraubenkopf ab. Die Abstützung kann unmittelbar sein, aber auch mittelbar, z.B. über Unterlegscheiben, eine zwischengeschaltete Feder, insbesondere Tellerfeder, oder dergleichen.

Die Widerlagereinrichtung ist zweckmäßigerweise durch eine sich insbesondere an der Gegenhalterung abstützende Widerlager-Federanordnung in Richtung von dem Schraubenkopf weg federbelastet. Die Federanordnung umfasst beispielsweise eine oder zwei Schraubenfedern, Tellerfedern oder dergleichen.

Die Widerlagereinrichtung und/oder die Gegenhalterung weist zweckmäßigerweise ein Plattenteil auf. Bei der Widerlagereinrichtung sind ferner eine Mutter, insbesondere eine selbstsichernde Mutter, ein U-förmiges Profilteil, ein Pratzenteil oder dergleichen vorteilhaft. Auch Kombinationen der vorgenannten Komponenten können bei der Widerlagereinrichtung vorgesehen sein. Der Drehlagerbolzen kann auch unmittelbar in ein Plattenteil, ein Profilteil oder ein Pratzenteil eingeschraubt sein, insbesondere wenn keine Mutter vorgesehen ist. Sofern eine Mutter vorgesehen ist, ist diese zweckmäßigerweise an dem Plattenteil, dem Pratzenteil, dem Profilteil oder dergleichen, befestigt, vorzugsweise durch Schweißen oder Kleben, und/oder verdrehgesichert.

Weiterhin ist es möglich, dass die Widerlagereinrichtung, z.B. ein Spannkörper der Widerlagereinrichtung, eine Führungsnut zum Eingriff eines Führungsvorsprungs, z.B. eines Verstärkungsschenkels, einer zu spannenden Komponente, z.B. des ersten Bauteils, aufweist.

Die Widerlagereinrichtung weist zweckmäßigerweise mindestens eine Führungsfläche zur Führung eines Bauteils oder zur Führung an einem Bauteil auf, z.B. den vorgenannten Profilen (Tragprofil, Auszugsprofil oder dergleichen). Die Führungsfläche ist zweckmäßigerweise an einem von einer Widerlagerfläche abstehenden, insbesondere winkelig abstehenden, Führungsschenkel der Widerlagereinrichtung vorgesehen, insbesondere, wenn diese als U-förmiges Profilteil ausgestaltet ist oder ein solches Profilteil aufweist.

Besonders bevorzugt ist die Verwendung der Erfindung bei einem Lastenträger. Es versteht sich, dass auch eine Anhängekupplung, insbesondere eine Anhängekupplung für Personenkraftfahrzeuge, die Kraftfahrzeuganbaukomponente bilden kann. Der Lastenträger kann ein an einem Kraftfahrzeug lösbar befestigbarer Lastenträger sein, beispielsweise ein Lastenträger, der am Kugelkopf einer Fahrzeugkupplung befestigbar ist. Der Lastenträger kann aber auch ein am Kraftfahrzeug stationär angebauter Lastenträger ausgestaltet sein, beispielsweise als ein Lastenträger, der in der Art einer Schublade aus einem Heckbereich des Kraftfahrzeuges ausziehbar ist.

Nachfolgend wird ein Ausführungsbeispiel der Erfindung anhand der Zeichnung erläutert. Es zeigen:
- Fig. 1: eine perspektivische Schrägansicht einer Kraftfahr- zeuganbaukomponente in Gestalt eines Lastenträgers,
- Fig. 2: eine Drehlagereinrichtung des Lastenträgers gemäß Figur 1, etwa entsprechend einem zu einem Aus- schnitt A gegenüberliegend spiegelbildlichen Aus- schnitt B in Figur 1,
- Fig. 3: eine perspektivische Explosionsdarstellung der Drehlagereinrichtung in Gestalt einer Spanneinrich- tung gemäß Figur 2 von schräg unten,
- Fig. 4: eine Draufsicht der Drehlagereinrichtung gemäß Fi- gur 3,
- Fig. 5: eine Querschnittsansicht der Drehlagereinrichtung gemäß Figur 4 entlang einer Schnittlinie B-B,
- Fig. 5a: die Spanneinrichtung gemäß Figuren 2 bis 5 in per- spektivischer Schrägansicht von oben in Lösestel- lung,
- Fig. 5b: die Spanneinrichtung gemäß Figur 5a in Spannstel- lung,
- Fig. 6: eine perspektivische Schrägansicht einer modifi- zierten Ausführungsform einer Drehlagereinrichtung und Spanneinrichtung, und
- Fig. 7: eine Querschnittsansicht entlang einer Schnittlinie C-C in Fig. 6 (im montierten Zustand).

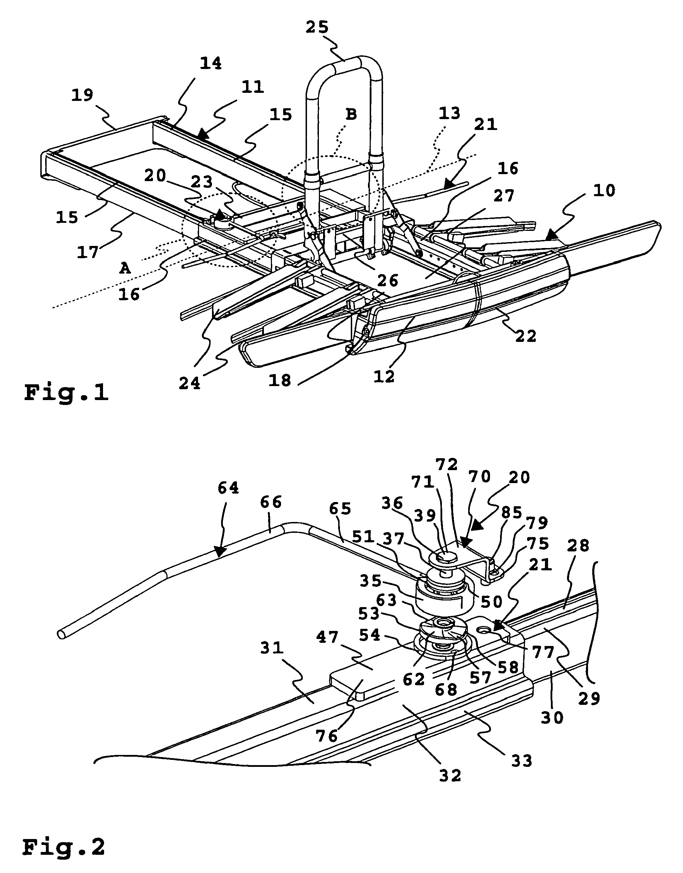

Bei einem eine Kraftfahrzeuganbaukomponente 10 bildenden Lastenträger 11 gemäß Figur 1 ist eine Tragstruktur 12 an einer bezüglich eines Kraftfahrzeugs 13 fahrzeugfesten Führungsstruktur 14 beweglich gelagert. Die Führungsstruktur 14 ist in einem Innenraum einer Karosserie des Kraftfahrzeugs 13, insbesondere eines Personenkraftwagens, befestigt. Die Tragstruktur 12 ist bezüglich der Führungsstruktur 14 beweglich gelagert, vorliegend verschieblich, wobei eine verschwenkbare Lagerung durchaus bei einer alternativen Ausführungsform der Erfindung denkbar ist.

Die Tragstruktur 12 umfasst Tragprofile 15, an denen Auszugsprofile 16 der Tragstruktur 12 verschieblich gelagert sind. Die Tragprofile 15 bilden erste Bauteile 17, die Auszugsprofile 16 zweite Bauteile 18, die jeweils durch eine Drehlagereinrichtung 20 umfassende Spanneinrichtung 21 miteinander verspannbar sind.

Die beiden Tragprofile 15 und die daran geführten Auszugsprofile 16 verlaufen jeweils parallel zueinander. Die Tragprofile 15 sind optional durch einen Querträger 19 miteinander verbunden. Die Tragprofile 15 befinden sich vorzugsweise zumindest im Wesentlichen in einem Innenraum einer Karosserie des Kraftfahrzeugs 13, vor deren Heck die Tragstruktur 12 im in Figur 1 dargestellten ausgezogenen, eine Fahrstellung darstellenden Zustand vorsteht.

Die beiden Auszugsprofile 16 sind an ihrer vom Kraftfahrzeug 13 durch einen Querträger 22 und an ihrer dem Kraftfahrzeug 13 zugewandten Seite durch einen weiteren Querträger 23 miteinander verbunden.

An den beiden Auszugsprofilen 16 sind Erweiterungsbauteile beweglich gelagert, nämlich beispielsweise Tragrinnen 24 zum Aufstellen von Fahrrädern sowie ein Trägerbügel, der seinerseits an einem sich zwischen den Auszugsprofilen 16 erstreckenden Querträger 26 schwenkbar gelagert ist. Die Erweiterungsbauteile, nämlich der Trägerbügel 25 und die Tragrinnen 24 sind zwischen einer in Figur 1 dargestellten Gebrauchsstellung, bei der sie seitlich und nach oben vor die Auszugsprofile 16 vorstehen, und einer Nichtgebrauchsstellung verstellbar, bei der die Erweiterungsbauteile 24, 25 in einem Innenraum 27 zwischen den beiden Auszugsprofilen 16 positioniert sind.

Das Tragprofil 15 ist ein im Wesentlichen rohrförmiges, vorliegend im Querschnitt etwa rechteckiges Tragprofil, dessen Querbreite kleiner ist als dessen Querhöhe. Die Tragprofile 15 weisen an ihrer Oberseite einen Längsschlitz 28 auf, in den die Drehlagereinrichtung 20 bzw. Spanneinrichtung 21 zum Verspannen der Profile 15, 16 eingreift. Der Längsschlitz 28 befindet sich zwischen zwei nach innen vor Seitenwände 30 des jeweiligen Tragprofils 15 vorstehende Stützabschnitte 29 angeordnet.

Auf den Stützabschnitten 29 liegt ein oberer Querschenkel 31 des im Querschnitt im Wesentlichen U-förmigen Auszugsprofils 16 auf. Der Querschenkel 31 verbindet Seitenwände 32 des Auszugsprofils 16. An den freien Enden der Seitenwände 32 sind jeweils seitlich auskragende Verstärkungsprofile 33 angeordnet, so dass das jeweilige Auszugsprofil 16 im Querschnitt eine Hutform aufweist. Die Seitenwände 32, 30 können auch abgesehen von einem zur Beweglichkeit erforderlichen Spiel im Wesentlichen aneinander anliegen. Das Auszugsprofil 16 ist auf dem Tragprofil 15 angeordnet und übergreift dieses.

An beiden Kombinationen von Tragprofil 15 und Auszugsprofil 16 ist jeweils eine die beiden jeweiligen Bauteile 17, 18 miteinander verspannende Spanneinrichtungen 21 vorgesehen, die manuell betätigbar ist. Die beiden Spanneinrichtungen 21 basieren jeweils auf einer Drehlagereinrichtung 20 mit einem eine im Wesentlichen scheibenartige Gestalt aufweisenden Schwenkkörper 35, der von einem Drehlagerbolzen 36 durchdrungen ist. Der Schwenkkörper 35 ist an einem Drehlagerabschnitt 37 des Drehlagerbolzens 36 um eine Drehlagerbolzen-Drehachse 38 des Drehlagerbolzens 36 schwenkbar bzw. drehbar gelagert. Der Drehlagerabschnitt 37 ist zwischen einem Schraubenkopf 39 und einem Gewindeabschnitt 40 des Drehlagerbolzens 36 angeordnet, mit dem der Drehlagerbolzen 36 in eine Mutter 41 einer Widerlagereinrichtung 42 eingeschraubt ist.

Die Widerlagereinrichtung 42 ist in einem Innenraum des Tragprofils 15 angeordnet. Der Drehlagerbolzen 36 durchdringt dementsprechend den Längsschlitz 28. Ferner durchdringt der Drehlagerbolzen 36 eine Widerlagerplatte 43 sowie ein Widerlager-Profilteil 44. Die Widerlagerplatte 43 und das Profilteil 44 sind ebenfalls im Innenraum des Tragprofils 15 angeordnet. Die Widerlagerplatte 43 stützt sich dabei an der Unterseite der beiden Stützabschnitte 29 ab. An der Widerlagerplatte 43, die sich zweckmäßigerweise zwischen den beiden Seitenwänden 30 erstreckt und vorteilhaft an deren Innenseiten zur Bildung einer Führung anliegt, ist das Widerlager-Profilteil 44 angeordnet. Das Profilteil 44 hat eine U-förmige Gestalt. Ein Tragschenkel 45 des jeweiligen Profilteils 44 hat zweckmäßigerweise im Wesentlichen dieselbe Flächenausdehnung wie die Widerlagerplatte 43 und liegt vorteilhaft im Wesentlichen flächig an dieser an. Von dem Tragschenkel 45 stehen seitlich Führungsschenkel 46 ab. Die Führungsschenkel 46 stützen sich zur Führung am Tragprofil 15 an den Innenseiten von dessen Seitenwänden 30 ab.

Zwischen den beiden Führungsschenkeln 46 ist die Mutter 41 angeordnet. Vorteilhaft liegt ein Außenumfang der Mutter 41 formschlüssig am jeweiligen Führungsschenkel 46 an, so dass eine Drehsicherung gebildet ist. Es versteht sich, dass die Mutter 41 auch mit übrigen Komponenten einer Widerlagereinrichtung verklebt, verschweißt oder in sonstiger Weise fest verbunden sein kann, um eine Verdrehsicherung zu realisieren. Weiterhin ist es optional möglich, dass die Mutter 41 eine selbstsichernde Mutter ist.

Vorzugsweise durchdringt der Drehlagerbolzen 36 die Widerlagereinrichtung 42 etwa im Bereich ihrer Längsmitte, so dass sich die Widerlagereinrichtung 42 beidseits des Drehlagerbolzens 36 optimal am jeweiligen Tragprofil 15 abstützt.

Die Spanneinrichtung 21 stützt sich mit einem Stützkörper 47 am Auszugsprofil 16 ab. Der Stützkörper 47 ist vorliegend als eine Stützplatte ausgestaltet, wobei auch andere Geometrien möglich sind. Der Stützkörper 47 stützt sich an der Oberseite des Auszugsprofils 16 ab, vorliegend an dessen oberem Querschenkel 31. Der Stützkörper 47 ist zweckmäßigerweise mit dem Bauteil fest verbunden, an dem er sich abstützt. Beispielsweise ist der Stützkörper 47 an das Auszugsprofil 16 angeklebt, mit diesem verschweißt oder dergleichen fest verbunden.

Die Widerlagereinrichtung 42 ist durch eine Widerlager-Federanordnung 48 in einer vom Schraubenkopf 39 weg weisenden Richtung federbelastet. Die Federanordnung 48 umfasst Federn 49, die beidseits des Drehlagerbolzens 36 den Längsschlitz 28 durchdringen. Die Federn 49 stützen sich am Stützkörper 47 und am Tragschenkel 45 des Profilteils 44 ab. Die Federn 49 könnten sich aber auch direkt am Auszugsprofil 16, z.B. dessen Querschenkel 31, abstützen. Vorzugsweise sind die Federn 49 mit dem Stützkörper 47 - oder auch mit dem Auszugsprofil 16, z.B. dessen Querschenkel 31 - und der Widerlagereinrichtung 42 fest verbunden, so dass eine unverlierbare Konfiguration geschaffen ist. Dies ist aber insoweit nicht nötig, als der Drehlagerbolzen 36, insbesondere dessen Schraubenkopf 39, den Stützkörper 47 in Richtung der Widerlagereinrichtung 42 kraftbeaufschlagt, wofür die nachfolgenden Komponenten vorgesehen sind:

Der Drehlagerbolzen 36 durchdringt eine Unterlegscheibe 50, die sich am Schraubenkopf 39 abstützt. Unterhalb der Unterlegscheibe 50 ist eine ebenfalls vom Drehlagerbolzen 36 angeordnete Feder, vorliegend eine Tellerfeder 51, einer Federanordnung 52 angeordnet. Die Tellerfeder 51 stützt sich einerseits an der Unterlegscheibe 50 und somit mittelbar am Schraubenkopf 39 und andererseits an dem Schwenkkörper 35 ab.

Weiterhin durchdringt der Drehlagerbolzen 36 einen Gegenkonturkörper 53, der zwischen dem Stützkörper 47 und dem Schwenkkörper 35 angeordnet ist. Der Gegenkonturkörper 53 ist von einer ringförmigen Dichtung 54 umgeben, die ein Eindringen von Schmutz in Zwischenräume zwischen den Komponenten der Spanneinrichtung 21 verhindert.

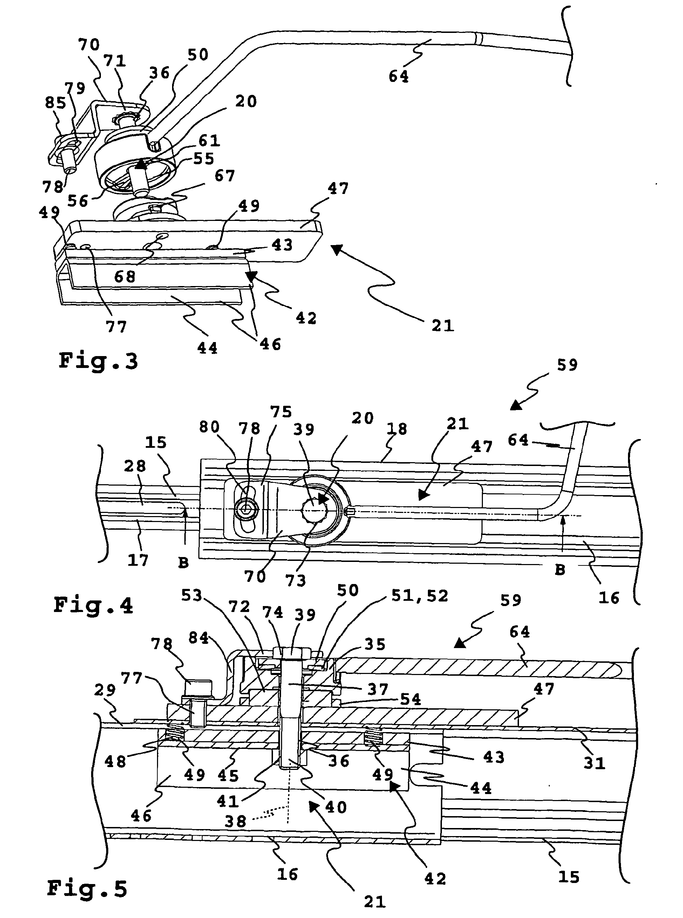

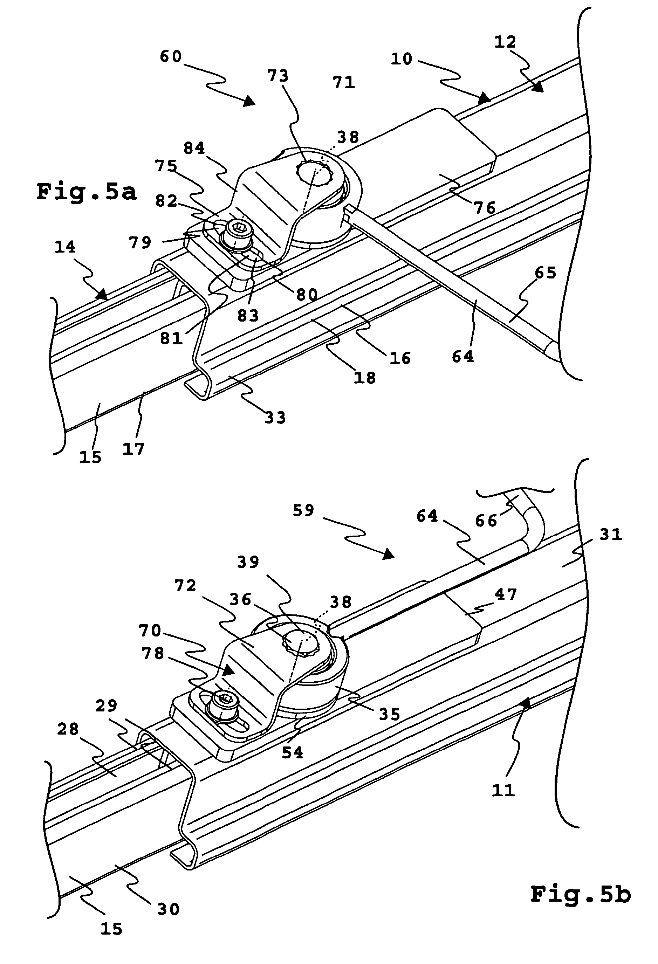

An einer dem Gegenkonturkörper 53 zugewandten Flachseite 55 des Schwenkkörpers 35 sind Spannkonturen 56 angeordnet, die mit Gegenkonturen 57 an einer dem Schwenkkörper 35 zugeordneten Flachseite 58 des Gegenkonturkörpers 53 angeordnet sind. Durch Verdrehen des Schwenkkörpers 35 können die Spannkonturen 56, 57 relativ zueinander verstellt werden, wodurch die Spanneinrichtung 21 zwischen einer in den Figuren 1, 4 und 5b dargestellten Spannstellung 59 und einer in Figur 5a dargestellten Lösestellung 60 verstellbar sind. In der Spannstellung 59 liegen Sektorvorsprünge 61, 62 der Konturen 56, 57 aufeinander.

In der Lösestellung 60 befinden sich die Sektorvorsprünge 61 der Spannkontur 56 in Vertiefungen 63 zwischen den Sektorvorsprüngen 62, das heißt im Bereich der Flachseite 58.

Beim Verdrehen in die Spannstellung 59 wird der Schwenkkörper 35 von dem Stützkörper 47 entgegen der Kraft der Federanordnungen 48, 52 beaufschlagt, so dass der Schraubenkopf 39 und mithin der Drehlagerbolzen 36 in Richtung von dem Stützkörper 47 weg kraftbeaufschlagt sind und somit die Widerlagereinrichtung 42 in Richtung des Stützkörpers 47 ziehen. Dadurch werden die beiden zwischen dem Stützkörper 47 und der Widerlagereinrichtung 42 befindlichen Bestandteile des ersten und zweiten Bauteils 17 und 18, vorliegend die beiden Stützabschnitte 29 und der Querschenkel 31, miteinander verspannt.

Der Schwenkkörper 35 ist bequem mit einem Bedienhebel 64 betätigbar. Der Bedienhebel 64 ist winkelig und weist einen mit dem Schwenkkörper 35 verbundenen Abschnitt 65 sowie einen von diesem Abschnitt 65 winkelig, beispielsweise etwas mehr als 90 Grad, abstehenden Abschnitt 66 auf. Der Abschnitt 65 ist in der Spannstellung 59 oberhalb des Auszugsprofils 16 angeordnet und steht in der Lösestellung 60 seitlich vom Auszugsprofil 16 weg, vorzugsweise in Richtung des Innenraumes 27, so dass die Tragstruktur 12 in einen Innenraum des Kraftfahrzeugs 13 verschieblich ist.

Der Gegenkonturkörper 53 ist durch eine Verdrehsicherung verdrehgesichert. Die Verdrehsicherung wirkt vorliegend auf den Stützkörper 47. Die Verdrehsicherung umfasst einen oder zwei Vorsprünge 67, die in korrespondierende Aufnahmen 68 des Stützkörpers 47 eingreifen.

Zur Einstellung einer jeweiligen Spannkraft der Spanneinrichtung 21 ist es zweckmäßig, wenn der Drehlagerbolzen 36 mehr oder minder weit in die Widerlagereinrichtung 42 einschraubbar ist. In der jeweiligen Drehstellung sollte der Drehlagerbolzen 36 jedoch verdrehgesichert werden, was gemäß der Erfindung mittels einer Sicherungseinrichtung 70 gelöst ist:

Der Schraubenkopf 39 ist in einer Halteaufnahme 71 an einem Schraubenkopfabschnitt 72 der Sicherungseinrichtung 70 aufgenommen. Der Schraubenkopf 39 wird von der Halteaufnahme 71 formschlüssig gehalten. Vorliegend ist die Halteaufnahme 71 als eine Durchgangsöffnung an dem plattenartigen Schraubenkopfabschnitt 72 ausgestaltet, wobei eine Ausführung als Sackloch ebenfalls bei einer erfindungsgemäßen Sicherungseinrichtung möglich ist. Diese Ausführungsform ist insbesondere dann vorteilhaft, wenn die Halteaufnahme nicht wie die Halteaufnahme 71 eine Innenumfangskontur 73 hat, die formschlüssig die Außenumfangskontur 74 des Schraubenkopfs 39 hält, sondern beispielsweise an einer Stirnseite bzw. Endseite des jeweiligen Drehbolzens angreift. Dort könnte beispielsweise ein Kreuzschlitz, eine Torxaufnahme, eine Inbusaufnahme oder dergleichen am jeweiligen Schraubenkopf vorgesehen sein, in die ein entsprechender Vorsprung der Halteaufnahme der Sicherungseinrichtung eingreift.

Die Außenumfangskontur 74 des Schraubenkopfes 39 ist polygonal, vorliegend hexagonal. Somit ist eine Anzahl von Außenecken beispielsweise sechs. Die Innenumfangskontur 73 ist ebenfalls polygonal, weist jedoch eine größere Anzahl von Innenecken als sechs auf, vorliegend beispielsweise zwölf, so dass die Sicherungseinrichtung 70 nicht verdreht werden muss, wenn der Schraubenkopf 39 beispielsweise um 30 Grad verdreht wird. Es versteht sich, dass die Anzahl der Innenecken der Innenumfangskontur 73 auch noch größer sein kann, wenn ein entsprechender Formschluss in der jeweiligen Drehposition des Drehlagerbolzens 36 noch herstellbar ist.

Die Sicherungseinrichtung 70 ist mit einem Befestigungsabschnitt 75 an einer Gegenhalterung 76 befestigt, die vorliegend durch den Stützkörper 47 gebildet ist. An der Gegenhalterung 76 ist eine Schraubaufnahme 77 für einen Sicherungsbolzen 78 vorhanden, der den Befestigungsabschnitt 75 an einem Durchtrittsöffnung 79 durchdringt. Die Durchtrittsöffnung 79 ist als Langloch 80 ausgestaltet. Die Durchtrittsöffnung 79 bildet eine Durchtrittsöffnungsanordnung 81, die mehrere nebeneinander liegende Durchtrittsöffnungsbereiche aufweist, beispielsweise Durchtrittsöffnungsbereiche 82 und 83. Eine Mittelachse des Langloches 80 hat stets im Wesentlichen denselben Radialabstand zur Drehlagerbolzen-Drehachse 38, so dass die Durchtrittsöffnungsbereiche 82, 83 ebenfalls denselben Radialabstand zu Drehlagerbolzen-Drehachse 38 aufweisen. Dadurch ist es möglich, um die Drehlagerbolzen-Drehachse 38 als Schwenkachse zu schwenken und somit den Drehlagerbolzen 36 in beliebigen Drehstellungen drehfest festzulegen. Der Befestigungsabschnitt 75 und der Schraubenkopfabschnitt 72 weisen einen Versatz zueinander auf und sind durch einen Verbindungsabschnitt 84 miteinander verbunden. Somit entsteht insgesamt eine stufige Seitenkontur, der plattenartigen Abschnitte 72, 75 und 84 der Sicherungseinrichtung 70.

Ein Schraubenkopf 85 des Sicherungsbolzens 78 hat einen größeren Durchmesser als eine Querbreite der Durchtrittsöffnung 79, so dass der Befestigungsabschnitt 75 zwischen den Schraubenkopf 85 und die Gegenhalterung 76 geklemmt ist.

Denkbar wäre auch noch eine in der Zeichnung nicht dargestellt Variante, bei der der Befestigungsabschnitt sich in einen Zwischenraum zwischen zwei durch die jeweilige Spannvorrichtung geklemmte Komponenten hinein erstreckt. Man könnte sich das beispielsweise so vorstellen, dass das freie Ende des Befestigungsabschnitts 75 sich um die Gegenhalterung 76 herum erstreckt, so dass das freie Ende zwischen der Gegenhalterung 76 und dem Widerlagereinrichtung 42 zu liegen kommt, gegebenenfalls unter Zwischenschaltung eines weiteren geklemmten Bauteiles, hier beispielsweise der Stützabschnitte 29. Wird die Spanneinrichtung 21 dann gespannt, ist das freie Ende des Befestigungsabschnitts 75 drehfest festgelegt.

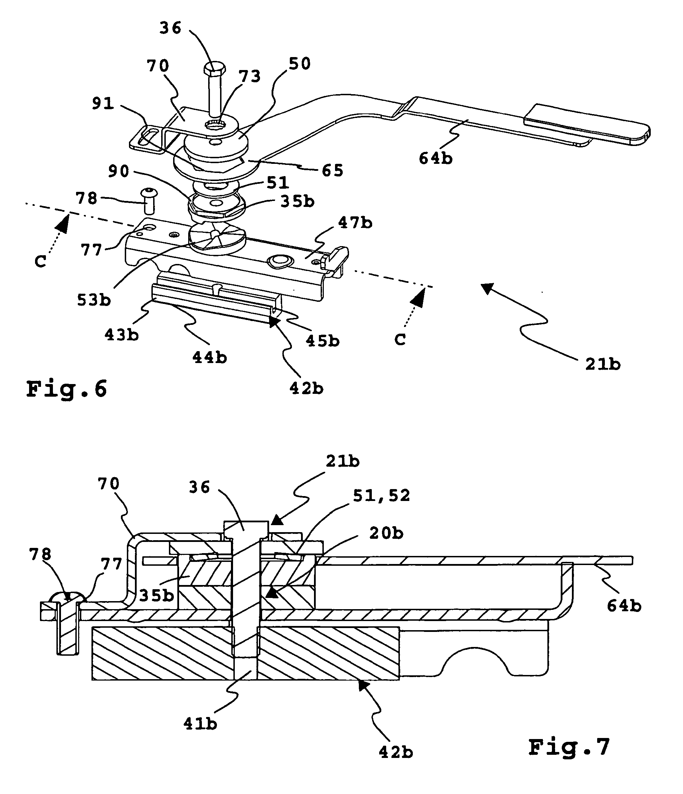

Ein in den Fig. 6 und 7 dargestelltes weiteres Ausführungsbeispiel einer erfindungsgemäßen Drehlagereinrichtung bzw. Spanneinrichtung hat teilweise gleiche Komponenten wie das Ausführungsbeispiel gemäß Fig. 1 bis 5. Zur Verdeutlichung von Unterschieden sind teilweise die Bezugsziffer um den Buchstaben "b" ergänzt.

Die Spanneinrichtung 21b und Drehlagereinrichtung 20b umfasst einen Schwenkkörper 35b, der an einem Drehlagerbolzen 36 schwenkbar gelagert ist. Im Unterschied zum Schwenkkörper 35 weist der Schwenkkörper 35b ausseitig eine polygonale Außenkontur 90, beispielsweise einen Außensechskant, auf, der zur drehfesten Kopplung mit einem Bedienhebel 64b dient. Der Bedienhebel 64b hat an seinem mit dem Schwenkkörper 35b verbundenen Abschnitt 65 eine zur Außenkontur formschlüssig passende Mitnahmekontur 91, beispielsweise einen Innensechskant. Die Außenkontur 90 greift formschlüssig in die Mitnahmekontur 91 ein. Oberhalb des Abschnittes 65 liegt ebenfalls eine Unterlegscheibe 50 auf, die von der Sicherungseinrichtung 70 übergriffen wird. In der beschriebenen Weise ist der Drehlagerbolzen 36 formschlüssig in der Innenumfangskontur 73 aufgenommen, insoweit also verdrehgesichert.

Der Drehlagerbolzen 36 kann in der gewünschten Länge bzw. Höhe in eine Bohrung 41 der Widerlagereinrichtung 42b eingeschraubt werden. Mithin ist also festzuhalten, dass beim Ausführungsbeispiel gemäß Fig. 6 und 7 keine separate Sicherungsmutter notwendig ist, sondern dass der Drehlagerbolzen 36, der auch einen Zuganker darstellt, direkt in die Widerlagereinrichtung 42 eingeschraubt ist.

Die Widerlagereinrichtung 42 umfasst im Unterschied zum vorherigen Ausführungsbeispiel ein Pratzenteil 43b. Das Pratzenteil 43b umfasst ein Widerlager-Profilteil 44b mit einer Nut 45b, die zum Eingriff einer Gegenkontur, beispielsweise des ersten Bauteils 17 vorgesehen ist. Beispielsweise kann ein entsprechender Profilschenkel des Tragprofils 15 in anderer Ausgestaltung als beim vorherigen Beispiel in die Nut 45b eingreifen.

Die Spanneinrichtung 21b umfasst weiterhin einen Stützkörper 47b, der im Unterschied zum Stützkörper 47b nicht nur plattenartig ist, sondern ein U-förmiges Profil aufweist. Somit kann der Stützkörper 47b mit seiner Bodenseite beispielsweise oben auf dem Auszugsprofil 16 aufliegen, während seine Seitenschenkel an den korrespondierenden Seitenschenkeln des Auszugprofiles 16 vorzugsweise flächig anliegen. Dadurch ist ein besonders fester Halt möglich.

Der Schwenkkörper 35 nimmt eine Tellerfeder 51, mithin also eine Federanordnung 52, auf bzw. hat eine hierfür vorgesehene Aufnahme.

Am Stützkörper 47b ist ein Gegenkonturkörper 53b angeordnet. An der dem Stützkörper 47b zugewandten Unterseite kann der Gegenkonturkörper 53b beispielsweise Vorsprünge haben, die in zugeordnete Ausnehmungen am Stützkörper 47b eingreifen, beispielsweise in Bohrungen, in die diese Vorsprünge eingreifen. Der Gegenkonturkörper 53b ist drehfest am Stützkörper 47b angeordnet.

An dieser Stelle sei bemerkt, dass ein Gegenkonturkörper am Stützkörper beispielsweise auch mittels Schweißen, Kleben oder dergleichen anderer Befestigungsmethode drehfest befestigt werden kann. Beispielsweise ist der Gegenkonturkörper 53b an den Stützkörper 47b angeschweißt.

Nicht dargestellt ist weiterhin, dass der Stützkörper einer erfindungsgemäßen Spanneinrichtung, gegebenenfalls auch das zweite Bauteil, beispielsweise das Auszugprofil 16, eine Gegenkontur in der Art der Gegenkontur 57 integral aufweisen kann. Man kann dies beispielsweise durch ein entsprechendes Einprägen, Fräsen oder dergleichen erzielen. Die Gegenkontur ist in diesem Falle zweckmäßigerweise gehärtet, so dass sie einem dauerhaften Betrieb stand hält.

Weiterhin könnte zur Winkelverstellung einer erfindungsgemäßen Sicherungseinrichtung nicht nur ein Langloch vorgesehen sein, sondern auch eine entsprechende Formschlusskontur, z.B. eine gezackte und/oder polygonale Kontur, zweckmäßigerweise eine bogenförmig verlaufende Kontur.

Zusammenfassend ist also festzuhalten, dass auf die erfindungsgemäße Weise insbesondere die Länge eines Drehlagerabschnittes einer Spanneinrichtung verstellbar, in dem ein Drehlagerbolzen in einer jeweiligen Einschraubstellung durch eine erfindungsgemäße Sicherungseinrichtung gesichert wird.

## Patentansprüche

1. Kraftfahrzeuganbaukomponente, insbesondere Lastenträger oder Anhängekupplung, mit einer Drehlagereinrichtung (20), bei der ein Schwenkkörper (35) an einem Drehlagerabschnitt (37) eines Drehlagerbolzens (36) drehbar gelagert ist, wobei der Drehlagerabschnitt (37) zwischen einem Schraubenkopf (39) des Drehlagerbolzens (36) und einer Widerlagereinrichtung (42) angeordnet ist, in die der Drehlagerbolzen (36) eingeschraubt ist, wobei eine Länge des Drehlagerabschnitts (37) durch Einschrauben und Ausschrauben des Drehlagerbolzens (36) um seine Drehlagerbolzen-Drehachse (38) in die Widerlagereinrichtung (42) einstellbar ist, **dadurch gekennzeichnet, dass** sie eine Sicherungseinrichtung (70) mit einer an einem Schraubenkopfabschnitt (72) angeordneten Formschluss-Halteaufnahme (71) zum Aufnehmen und formschlüssigen Halten des Schraubenkopfs (39) in seiner jeweiligen Drehlage aufweist, dass die Sicherungseinrichtung (70) einen vor den Schraubenkopf (39) vorstehenden, neben dem Schraubenkopfabschnitt (72) angeordneten Befestigungsabschnitt (75) zur Befestigung an einer Gegenhalterung (76) aufweist, und dass der Befestigungsabschnitt (75) in mindestens zwei Schwenklagen, deren Schwenkachse durch die Drehlagerbolzen-Drehachse (38) definiert ist, an der Gegenhalterung (76) festlegbar ist.

2. Kraftfahrzeuganbaukomponente nach Anspruch 1, **dadurch gekennzeichnet, dass** die Sicherungseinrichtung (70) durch einen Sicherungsbolzen (78) mit der Gegenhalterung (76) verbindbar ist, dass der Sicherungsbolzen (78) abhängig von der Schwenklage der Sicherungseinrichtung (70) zueinander beabstandete Durchtrittsöffnungsbereiche (82, 83) einer Durchtrittsöffnungsanordnung (81) durchdringt, die an dem Befestigungsabschnitt (75) der Sicherungseinrichtung (70) oder der Gegenhalterung (76) vorgesehen ist, und dass die Durchtrittsöffnungsbereiche (82, 83) im wesentlichen denselben Radialabstand zu der Drehlagerbolzen-Drehachse (38) aufweisen, wobei die Durchtrittsöffnungsbereiche (82, 83) zweckmäßigerweise Bestandteile eines bogenförmigen Langloches (80) sind.

3. Kraftfahrzeuganbaukomponente nach einem der vorhergehenden Ansprüche, **dadurch gekennzeichnet, dass** der Schraubenkopf (39) eine polygonale, insbesondere hexagonale, Außenumfangskontur (74) aufweist, und dass die Formschluss-Halteaufnahme (71) eine dazu korrespondierende polygonale Innenumfangskontur (73) aufweist.

4. Kraftfahrzeuganbaukomponente nach Anspruch 3, **dadurch gekennzeichnet, dass** eine Anzahl der Innenecken der Innenumfangskontur (73) größer als eine Anzahl der Außenecken der Außenumfangskontur (74) ist und/oder dass die Anzahl der Innenecken eine ganzzahlige Vielfache der Anzahl der Außenecken ist.

5. Kraftfahrzeuganbaukomponente nach einem der vorhergehenden Ansprüche, **dadurch gekennzeichnet, dass** der Schraubenkopfabschnitt (72) und der Befestigungsabschnitt (75) der Sicherungseinrichtung (70) einen Parallelabstand parallel zu der Drehlagerbolzen-Drehachse (38) aufweisen.

6. Kraftfahrzeuganbaukomponente nach einem der vorhergehenden Ansprüche, **dadurch gekennzeichnet, dass** die Sicherungseinrichtung (70) plattenartig ist.

7. Kraftfahrzeuganbaukomponente nach einem der vorhergehenden Ansprüche, **dadurch gekennzeichnet, dass** die Drehlagereinrichtung (20), insbesondere zur Bildung einer Spanneinrichtung (21), ein den Schwenkkörper (35) umfassendes Spanngetriebe aufweist, wobei der Schwenkkörper (35) mindestens eine Spannkontur (56) aufweist und an dem Drehlagerbolzen (36) zwischen einer ein erstes und ein zweites Bauteil (17, 18) der Kraftfahrzeuganbaukomponente (10) miteinander verspannenden Spannstellung (59) und einer Lösestellung (60) schwenkbar ist, in der die Bauteile relativ zueinander beweglich sind.

8. Kraftfahrzeuganbaukomponente nach Anspruch 7, **dadurch gekennzeichnet, dass** das erste Bauteil (17) durch ein Tragprofil (15) und das zweite Bauteil (18) ein an dem Tragprofil (15) verschieblich geführtes Auszugsprofil (16) gebildet sind und/oder dass der Schwenkkörper (35) eine scheibenförmige Gestalt aufweist und die mindestens eine Spannkontur (56) an einer von dem Drehlagerbolzen (36) durchdrungenen Flachseite (55) des Schwenkkörpers (35) angeordnet ist und/oder dass eine der mindestens einen Spannkontur (56) zugeordnete Gegenkontur (57) an einem Gegenkonturkörper (53), insbesondere einer von dem Drehlagerbolzen (36) durchdrungenen Spannscheibe oder der Gegenhalterung (76) oder dem Schraubenkopf (39), angeordnet ist.

9. Kraftfahrzeuganbaukomponente nach einem der Ansprüche 7 oder 8, **dadurch gekennzeichnet, dass** die Spannkontur (56) und/oder eine ihr zugeordnete Gegenkontur (57) durch eine Federanordnung (52), insbesondere parallel zur Drehlagerbolzen-Drehachse (38), in die Spannstellung (59) belastet sind, wobei die Federanordnung (52) zweckmäßigerweise eine von dem Drehlagerbolzen (36) durchdrungene Feder, insbesondere eine Tellerfeder (51), umfasst.

10. Kraftfahrzeuganbaukomponente nach einem der Ansprüche 7 bis 9, **dadurch gekennzeichnet, dass** die mindestens eine Spannkontur (56) und/oder die ihr zugeordnete Gegenkontur (57) an kreissektorartigen Sektorvorsprüngen (61, 62) angeordnet sind, die vor die Flachseite (55, 58) des Schwenkkörpers (35) oder des Gegenkonturkörpers (53), insbesondere der Spannscheibe, vorstehen und/oder dass die Spannkontur (56) und/oder die ihr zugeordnete Gegenkontur (57) Auflaufschrägen an den Sektorvorsprüngen (61, 62) umfassen.

11. Kraftfahrzeuganbaukomponente nach einem der vorhergehenden Ansprüche, **dadurch gekennzeichnet, dass** sich der Schwenkkörper (35) an dem Schraubenkopf (39) abstützt.

12. Kraftfahrzeuganbaukomponente nach einem der vorhergehenden Ansprüche, **dadurch gekennzeichnet, dass** die Widerlagereinrichtung (42) durch eine sich insbesondere an der Gegenhalterung (76) abstützende Widerlager-Federanordnung (48) in Richtung von dem Schraubenkopf (39) weg federbelastet ist.

13. Kraftfahrzeuganbaukomponente nach einem der vorhergehenden Ansprüche, **dadurch gekennzeichnet, dass** die Widerlagereinrichtung (42) ein Plattenteil und/oder eine insbesondere selbstsichernde Mutter (41) und/oder ein insbesondere U-förmiges Profilteil (44) und/oder ein Pratzenteil umfasst.

14. Kraftfahrzeuganbaukomponente nach einem der vorhergehenden Ansprüche, **dadurch gekennzeichnet, dass** die Widerlagereinrichtung (42) mindestens eine Führungsfläche, insbesondere an einem von einer Widerlagerfläche winkelig abstehenden Führungsschenkel (46), zur Führung eines Bauteils oder zur Führung an einem Bauteil (15) aufweist.

15. Kraftfahrzeuganbaukomponente (10) nach einem der vorhergehenden Ansprüche, **dadurch gekennzeichnet, dass** sie ein insbesondere aus einem Heckbereich eines Personen-Kraftfahrzeugs ausziehbarer Lastenträger oder eine Anhängekupplung ist.

## Claims

1. Motor vehicle attachment component, in particular load carrier or trailer coupling, comprising a pivot bearing device (20) wherein a pivot body (35) is rotatably mounted on a pivot bearing section (37) of a pivot bearing bolt (36), wherein the pivot bearing section (37) is located between a bolt head (39) of the pivot bearing bolt (36) and an abutment device (42) into which the pivot bearing bolt (36) is tightened, wherein a length of the pivot bearing section (37) can be adjusted by tightening or loosening the pivot bearing bolt (36) about its pivot bearing bolt axis of rotation (38) within the abutment device (42), **characterised in that** it comprises a securing device (70) with a positive-locking holding receptacle (71) provided on a bolt head section (72) for receiving and positively holding the bolt head (39) in its respective rotary position, **in that** the securing device (70) comprises a mounting section (75) projecting in front of the bolt head (39) and situated adjacent to the bolt head section (72) for mounting on a mating holder (76), and **in that** the mounting section (75) can be locked on the mating holder (76) in at least two pivot positions the pivot axis of which is defined by the pivot bearing bolt axis of rotation (38).

2. Motor vehicle attachment component according to claim 1, **characterised in that** the securing device (70) can be connected to the mating holder (76) by a securing bolt (78), **in that** the securing bolt (78) penetrates, in dependence on the pivot position of the securing device (70), two mutually spaced through-opening regions (82, 83) of a through-opening arrangement (81) provided on the mounting section (75) of the securing device (70) or the mating holder (76), and **in that** the through-opening regions (82, 83) have substantially the same radial distance from the pivot bearing bolt axis of rotation (38), the through-opening regions (82, 83) expediently being parts of an arcuate slot (80).

3. Motor vehicle attachment component according to any of the preceding claims, **characterised in that** the bolt head (39) has a polygonal, in particular hexagonal, external circumferential contour (74), and **in that** the positive-locking holding receptacle (71) has a corresponding polygonal internal circumferential contour (73).

4. Motor vehicle attachment component according to claim 3, **characterised in that** a number of the inner corners of the internal circumferential contour (73) is greater than a number of the outer corners of the external circumferential contour (74), and/or **in that** the number of the inner corners is an integral multiple of the number of the outer corners.

5. Motor vehicle attachment component according to any of the preceding claims, **characterised in that** the bolt head section (72) and the mounting section (75) of the securing device (70) have a parallel distance parallel to the pivot bearing bolt axis of rotation (38).

6. Motor vehicle attachment component according to any of the preceding claims, **characterised in that** the securing device (70) is plate-like.

7. Motor vehicle attachment component according to any of the preceding claims, **characterised in that** the pivot bearing device (20) comprises, in particular for the provision of a clamping device (21), a clamping gear mechanism including the pivot body (35), the pivot body (35) having at least one clamping contour (56) and being pivotable on the pivot bearing bolt (36) between a clamping position (59) in which a first and a second part (17, 18) of the motor vehicle attachment component (10) are clamped together and a release position (60) in which the parts are movable with respect to one another.

8. Motor vehicle attachment component according to claim 7, **characterised in that** the first part (17) is represented by a carrying profile (15) and the second part (18) is represented by an extension profile (16) displaceably guided on the carrying profile (15), and/or **in that** the pivot body (35) has a disc-like shape and the at least one clamping contour (56) is located on a flat side (55) of the pivot body (35) which is penetrated by the pivot bearing bolt (36), and/or **in that** a mating contour (57) assigned to the at least one clamping contour (56) is provided on a mating contour body (53), in particular on a clamping plate penetrated by the pivot bearing bolt (36) or on the mating holder (76) or on the bolt head (39).

9. Motor vehicle attachment component according to claim 7 or 8, **characterised in that** the clamping contour (56) and/or a mating contour (57) assigned thereto is/are loaded by a spring arrangement (52) towards the clamping position (59), in particular parallel to the pivot bearing bolt axis of rotation (38), the spring arrangement (52) expediently comprising a spring penetrated by the pivot bearing bolt (36), in particular a Belleville spring (51).

10. Motor vehicle attachment component according to any of claims 7 to 9, **characterised in that** the at least one clamping contour (56) and/or the mating contour (57) assigned thereto is/are are located on circular sector-type sector projections (61, 62) which project in front of the flat side (55, 58) of the pivot body (35) or of the mating contour body (53), in particular the clamping plate, and/or **in that** the clamping contour (56) and/or the mating contour (57) assigned thereto comprise(s) leading bevels on the sector projections (61, 62).

11. Motor vehicle attachment component according to any of the preceding claims, **characterised in that** the pivot body (35) is supported on the bolt head (39).

12. Motor vehicle attachment component according to any of the preceding claims, **characterised in that** the abutment device (42) is spring-loaded in the direction away from the bolt head (39) by an abutment spring arrangement (48) which is in particular supported on the mating holder (76).

13. Motor vehicle attachment component according to any of the preceding claims, **characterised in that** the abutment device (42) comprises a plate part and/or an in particular self-locking nut (41) and/or an in particular U-shaped profile part and/or a claw part.

14. Motor vehicle attachment component according to any of the preceding claims, **characterised in that** the abutment device (42) comprises at least one guide surface, in particular a guide leg (46) projecting at an angle from an abutment surface, for the guidance of a part or for guidance on a part (15).

15. Motor vehicle attachment component according to any of the preceding claims, **characterised in that** it is a load carrier which can be extended from a rear region of a passenger car, or a trailer coupling.

## Revendications

1. Composant additionnel pour véhicule automobile, en particulier porte charge ou attelage, avec un système de palier rotatif (20), dans lequel un corps pivotant (35) est monté de manière rotative sur une tige de support rotative (37) d'un boulon servant de pivot (36), la tige de support rotative(37) étant disposée entre une tête de vis (39) du boulon servant de pivot (36) et un dispositif anti-roulement (42) dans lequel le boulon servant de pivot (36) est vissé, une longueur de la tige de support rotative (37) pouvant être réglée par vissage ou dévissage du boulon servant de pivot (36) autour de son axe de rotation de boulon (38) dans le dispositif anti-roulement (42), **caractérisé en ce qu'**il présente un dispositif de sécurité (70) avec logement d'arrêt à accouplement mécanique (71) disposé au niveau d'une section de tête de vis (72) pour recevoir et bloquer par accouplement mécanique la tête de vis (39) dans sa position de rotation respective, **en ce que** le dispositif de sécurité (70) présente une partie de fixation (75) dépassant devant la tête de vis (39), disposée à côté de la section de tête de vis (72), pour la fixation sur une plaque d'arrêt (76), et **en ce que** la partie de fixation (75) peut être fixée sur la plaque d'arrêt (76) dans au moins deux positions de pivotement, dont l'axe de pivotement est défini par l'axe de rotation du boulon (38).

2. Composant additionnel pour véhicule automobile selon la revendication 1, **caractérisé en ce que** le dispositif de sécurité (70) peut être relié à la plaque d'arrêt (76) grâce à un blocage de sécurité (78), **en ce que** le blocage de sécurité (78) traverse, en fonction de la position de pivotement du dispositif de sécurité (70), des zones d'ouverture de passage (82, 83) espacées les unes des autres d'un dispositif d'ouvertures de passage (81), lequel est prévu sur la partie de fixation (75) du dispositif de sécurité (70) ou la plaque d'arrêt (76), et **en ce que** les zones d'ouverture de passage (82, 83) présentent essentiellement le même espacement radial par rapport à l'axe de rotation du boulon (38), les zones d'ouverture de passage (82, 83) étant de manière utile des parties intégrantes d'un trou oblong (80) en forme d'arc.

3. Composant additionnel pour véhicule automobile selon l'une des revendications précédentes, **caractérisé en ce que** la tête de vis (39) présente un contour périphérique extérieur (74) polygonal, en particulier hexagonal, et **en ce que** le logement d'arrêt à accouplement mécanique (71) présente un contour périphérique intérieur (73) polygonal en correspondance avec celui-ci.

4. Composant additionnel pour véhicule automobile selon la revendication 3, **caractérisé en ce qu'**un certain nombre des coins intérieurs du contour périphérique intérieur (73) sont plus grands qu'un certain nombre de coins extérieurs du contour périphérique extérieur (74) et/ou **en ce que** le nombre des coins intérieurs est un multiple d'un nombre entier du nombre de coins extérieurs.

5. Composant additionnel pour véhicule automobile selon l'une des revendications précédentes, **caractérisé en ce que** la section de tête de vis (72) et la partie de fixation (75) du dispositif de sécurité (70) présentent un espacement parallèle de manière parallèle à l'axe de rotation de boulon (38).

6. Composant additionnel pour véhicule automobile selon l'une des revendications précédentes, **caractérisé en ce que** le dispositif de sécurité (70) est semblable à une plaque.

7. Composant additionnel pour véhicule automobile selon l'une des revendications précédentes, **caractérisé en ce que** le système de palier rotatif (20) présente, en particulier pour la formation d'un dispositif de serrage (21), un organe de serrage entourant le corps pivotant (35), le corps pivotant (35) présentant au moins un contour de serrage (56) et pouvant pivoter sur le boulon servant de pivot (36) entre une position de serrage (59) serrant ensemble une première et une deuxième pièce (17, 18) du composant additionnel pour véhicule automobile (10) et une position de desserrage (60) dans laquelle les pièces sont mobiles les unes par rapport aux autres.

8. Composant additionnel pour véhicule automobile selon la revendication 7, **caractérisé en ce que** la première pièce (17) est formée par un profil de support (15) et la deuxième pièce (18) par un profil extensible (15) guidé de manière coulissante sur le profil de support (15) et/ou **en ce que** le corps pivotant (35) présente un aspect en forme de disque et ce ou ces contours de serrage (56) étant disposé(s) sur un côté plat traversé par le boulon servant de pivot (36) du corps pivotant (35) et/ou **en ce qu'**un contour antagoniste (57) associé à ce ou ces contour(s) de serrage (36) est disposé sur un corps de contour antagoniste (53), en particulier un disque de serrage traversé par le boulon servant de pivot (36) ou la plaque d'arrêt (76) ou la tête de vis (39).

9. Composant additionnel pour véhicule automobile selon l'une des revendications 7 ou 8, **caractérisé en ce que** le contour de serrage (56) et/ou un contour antagoniste (57) qui lui est associé, est sollicité par un dispositif de ressort (52), en particulier parallèlement à l'axe de rotation de boulon (38), dans la position de serrage (59), le dispositif de ressort (52) comprenant de manière utile un ressort traversé par le boulon servant de pivot (36), en particulier une rondelle à ressorts (51).

10. Composant additionnel pour véhicule automobile selon l'une des revendications 7 à 9, **caractérisé en ce que** ce ou ces contour(s) de serrage (56) et/ou le contour antagoniste (57) qui lui/leur est/sont associé(s) sont disposés sur des saillies de secteur de type secteurs circulaires (61, 62), lesquelles dépassent devant le côté plat (55, 58) du corps pivotant (35) ou du corps de contour antagoniste (53), en particulier du disque de serrage et/ou **en ce que** le contour de serrage (56) et/ou le contour antagoniste (57) qui lui est associé présentent des plans inclinés sur les saillies de secteur (61, 62).

11. Composant additionnel pour véhicule automobile selon l'une des revendications précédentes, **caractérisé en ce que** le corps pivotant (35) est en appui sur la tête de vis (39).

12. Composant additionnel pour véhicule automobile selon l'une des revendications précédentes, **caractérisé en ce que** le dispositif anti-roulement (42) est contraint par ressort dans une direction en éloignement de la tête de vis (39) grâce à un dispositif de ressort anti-roulement (48) en appui en particulier sur la plaque d'arrêt (76).

13. Composant additionnel pour véhicule automobile selon l'une des revendications précédentes, **caractérisé en ce que** le dispositif anti-roulement (42) comprend un élément de plaque et/ou un écrou indesserrable (41) et/ou une pièce profilée en particulier en forme de U (44) et/ou un élément de griffe.

14. Composant additionnel pour véhicule automobile selon l'une des revendications précédentes, **caractérisé en ce que** le dispositif anti-roulement (42) présente au moins une surface de guidage, en particulier un bras de guidage (46) dépassant de manière angulaire d'une surface anti-roulement, pour guider une pièce ou pour le guidage sur une pièce (15).

15. Composant additionnel pour véhicule automobile (10) selon l'une des revendications précédentes, **caractérisé en ce qu'**il est un porte charge extensible hors d'une zone arrière d'un véhicule automobile ou un attelage.
